# EUROPÄISCHE PATENTSCHRIFT

(11) **EP 2 836 467 B1**
(45) Veröffentlichungstag und Bekanntmachung des Hinweises auf die Patenterteilung: **26.02.2020**
(21) Anmeldenummer: 13715675.8
(22) Anmeldetag: 09.04.2013
(51) Int. Cl.: C02F 1/42, C02F 1/68, B01J 39/04, B01J 47/02

(54) **KARTUSCHE ZUR TRINKWASSERAUFBEREITUNG**
CARTRIDGE FOR PREPARING DRINKING WATER
CARTOUCHE DE TRAITEMENT DE L'EAU POTABLE

(30) Priorität: 12.04.2012 DE 102012007149
(43) Veröffentlichungstag der Anmeldung: 18.02.2015
(73) Patentinhaber: BWT water+more GmbH, 5310 Mondsee (AT)
(72) Erfinder: JOHANN, Jürgen, 69226 Nußloch (DE); BISSEN, Monique, 5310 Mondsee (AT)
(74) Vertreter: Friderichs, Gunther
(86) Internationale Anmeldenummer: PCT/EP2013/057398
(87) Internationale Veröffentlichungsnummer: WO 2013/153069

(56) Entgegenhaltungen:
- EP-A2- 2 263 503
- WO-A1-2006/095282
- WO-A1-2011/101483
- DE-A1- 3 304 152
- DE-A1- 10 231 096
- GB-A- 684 848
- US-A1- 2003 168 395

## Beschreibung

### Gebiet der Erfindung

Die Erfindung betrifft eine Kartusche zur Trinkwasseraufbereitung. Die Kartusche ist insbesondere für einen schwerkraftbetriebenen Wasserhaushaltsfilter oder als Einwegkartusche zum Einsetzen in die Zuleitung eines Geräts zur Getränkezubereitung vorgesehen.

### Hintergrund der Erfindung

Kartuschen, insbesondere Filterkartuschen zur Trinkwasseraufbereitung sind bekannt. Es handelt sich dabei zum Einen um Kartuschen, die in schwerkraftbetriebene Wasserfiltersysteme, insbesondere für Haushaltszwecke, eingesetzt werden. Dabei sitzt die Kartusche in einem Trichter, in den Wasser eingefüllt wird. Über einen Einlauf läuft das Wasser oben in die Kartusche hinein und verlässt an einem unteren Auslauf den Kartuschenboden.

Für andere Anwendungen, insbesondere in der Gastronomie und bei Automaten für die Zubereitung von Heißgetränken wie Kaffee oder Tee sind Kartuschen bekannt, welche entweder in ein Gerät eingesetzt werden oder welche Anschlüsse haben, um in eine Trinkwasserleitung zwischengeschaltet zu werden.

In Zentraleuropa werden derartige austauschbare Kartuschen in der Regel hauptsächlich verwendet, um die Wasserhärte, insbesondere die Carbonathärte des Trinkwassers zu reduzieren. Hierzu ist die Kartusche mit einem Ionenaustauschmaterial, zumeist mit einem schwach sauren Harz, welches als Granulat in einer Kammer angeordnet ist, versehen. Durch die Verwendung derartiger Kartuschen soll vor allem der Geschmack von Heißgetränken verbessert werden, insbesondere kann die für hartes Wasser typische Schlierenbildung bei Tee reduziert werden.

Die gattungsgemäßen Kartuschen zur Wasseraufbereitung können aber des Weiteren auch die Aufgabe haben, Schwebstoffe, Keime, Schwermetalle etc. aus dem Wasser zu entfernen.

Die Kartuschen sind dabei in der Regel als Einwegsystem ausgebildet, werden also nach der bestimmungsgemäßen mehrmaligen Verwendung weggeworfen oder als Pfandsystem einer Wiederverwertung zugeführt.

Die europäische Patentschrift EP 2 094 611 B1 (BWT International Trading Ltd.) zeigt ein Verfahren und eine Vorrichtung zur Anreicherung von Wasser mit Magnesiumionen. Insbesondere ist in diesem Patent eine Kartusche für ein schwerkraftbetriebenen Wasserhaushaltsfilter gezeigt, die ein schwach sauren Ionenaustauschermaterial umfasst, das zum Teil mit Wasserstoffionen und zum Teil mit Magnesiumionen beladen ist. Hierdurch wird auf besonders einfache Weise ermöglicht, das Wasser mit Magnesium anzureichern. Gleichzeitig wird die Ansäuerung des Trinkwassers durch das verwendete mit Magnesiumionen beladene Ionenaustauschermaterial reduziert.

Das Dokument WO 2011/101483 A1 zeigt eine Kartusche mit einem schwach sauren Ionenaustauscherharz, welches überwiegend mit Magnesium beladen ist.

### Aufgabe der Erfindung

Der Erfindung liegt demgegenüber die Aufgabe zugrunde, bekannte Kartuschen zur Trinkwasseraufbereitung weiter zu verbessern. Insbesondere soll die Selektivität im Hinblick auf zuzusetzendes Magnesiumionen verbessert und/oder auf ein aufwändiges Konditionieren eines Ionenaustauschmaterials mit zwei Ionenarten verzichtet werden können. Des Weiteren soll eine schnellere Abgabe von Magnesiumionen, erreicht werden.

### Zusammenfassung der Erfindung

Die Aufgabe der Erfindung wird bereits durch eine Kartusche zur Trinkwasseraufbereitung nach Anspruch 1 gelöst.

Bevorzugte Ausführungsformen und Weiterbildungen der Erfindung sind dem jeweiligen Unteransprüchen zu entnehmen.

Die Erfindung betrifft eine Kartusche zur Trinkwasseraufbereitung.

Insbesondere bezieht sich die Erfindung auf eine Kartusche für einen schwerkraftbetriebenen Wasserhaushaltsfilter, also ein System, bei dem die Kartusche in einen Trichter eingesetzt wird, in den das Wasser gegossen wird.

Eine derartige Kartusche umfasst in der Regel ein Gehäuse mit einem Einlauf und einem Auslauf. Ein- und Auslauf sind oft als Schlitze oder Gitterstruktur ausgebildet.

Weiter betrifft die Erfindung Kartuschen zur Verwendung für Geräte zur Zubereitung von Getränken. Dabei kann die Kartusche im Gerät sitzen, beispielsweise im Auslauf eines Wasserbehälters oder im Zulauf des Gerätes. Grundsätzlich wird zwischen Geräten zur Zubereitung von Heißgetränken wie beispielsweise Kaffee oder Tee und Geräten zur Zubereitung von Kaltgetränken unterschieden. Bei letzteren Geräten werden dem Wasser oft Süßstoff oder Zucker und Geschmackstoffe zugesetzt.

Die Kartusche umfasst ein Ionenaustauschermaterial, welches insbesondere als Granulat ausgebildet ist. Auch die Verwendung eines Vlies als Ionenaustauschermaterial ist denkbar.

Die Kartusche umfasst zumindest eine erste und eine weitere Kammer. Ein erster Teil des Ionenaustauschermaterials, welcher sich in einer ersten Kammer befindet, ist mit Magnesiumionen beladen und ein zweiter Teil des Ionenaustauschermaterials, welcher sich in einer weiteren Kammer befindet, ist mit Wasserstoffionen beladen.

Gemäß der Erfindung ist einer der beiden Teile des Ionenaustauschermaterials als stark saures Ionenaustauschermaterial und der andere Teil des Ionenaustauschermaterials als schwach saures Ionenaustauschermaterial ausgebildet.

Der Erfinder hat herausgefunden, dass die gleichzeitige Verwendung von stark sauren und schwach sauren Ionenaustauschermaterialien es möglich macht, auf sehr einfache Weise das Ionenaustauschermaterial derart auszubilden, dass die Eigenschaften des gefilterten Trinkwassers hinsichtlich pH-Wert und Zusammensetzung eingestellt werden können.

Gemäß der Erfindung ist das schwach saure Ionenaustauschermaterial im Auslieferungszustand überwiegend mit anderen Ionen beladen als das stark saure Ionenaustauschermaterial.

Die Beladung des stark sauren Teils mit Magnesiumionen führt zu einer verbesserten Selektivität hinsichtlich dieser Ionen. Des Weiteren tauscht der stark saure Kationenaustauscher die Gesamthärte und nicht nur die Karbonathärte, wie es beim schwach sauren Ionenaustauscher der Fall ist, aus.

Ionenaustauschprozesse sind Gleichgewichtsreaktionen, was insbesondere bei schwach sauren Ionenaustauschermaterialien dazu führt, dass je nach Zusammensetzung des aufzubereitenden Trinkwassers, die Selektivität hinsichtlich der einzelnen Ionenarten variiert. Der schwach saure Ionenaustaustauscher in der H-Form tauscht nur diejenigen Kationen, welche an die Karbonathärte gebunden sind aus.

Dies führt dazu, dass auch die Zusammensetzung des aufbereiteten Wassers, beispielsweise im Hinblick auf die Konzentration an Magnesiumionen, variiert und je nach verwendetem Wasser außerhalb eines gewünschten Bereiches liegen kann.

Bei Verwendung eines stark sauren Ionenaustauschermaterials, welches zumindest teilweise mit Magnesiumionen beladen ist, kann die gewünschte Konzentration an Ionen, die dem Wasser zugesetzt werden soll, gut eingestellt werden.

Gleichzeitig wird über einen überwiegend mit Wasserstoffionen beladenen Teil schwach sauren Ionenaustauschermaterials erreicht, dass die Wasserhärte, insbesondere die Carbonathärte, reduziert wird, ohne dass das Wasser unerwünscht stark angesäuert wird.

Ein weiterer Vorteil liegt darin begründet, dass, wie es bei einer bevorzugten Ausführungsform der Erfindung vorgesehen ist, ein Teil des Ionenaustauschermaterials überwiegend, vorzugsweise zumindest 90% mit einer Ionenart, insbesondere mit Wasserstoffionen, zu beladen. So kann ein Ionenaustauschermaterial auch nur mit einer Ionenart beladen werden.

So kann auf das verhältnismäßig aufwendige Konditionieren eines Ionenaustauschermaterials, insbesondere eines schwach sauren Ionenaustauschermaterials mit zwei Ionenarten, etwa mit Magnesium- und Wasserstoffionen, verzichtet werden.

Als schwach saures Ionenaustauschermaterial wird insbesondere ein kationisches Ionenaustauschermaterial mit einer Carboxylgruppe verwendet. Derartige synthetische Kunstharzionenaustauscher werden beispielsweise unter den Handelsnamen Lewatit® oder Amberlite® vertrieben.

Bei dem stark sauren Ionenaustauschermaterial handelt es sich vorzugsweise um ein Kationenaustauschermaterial mit Sulfonsäuregruppen.

Erfindungsgemäß ist der stark saure Teil überwiegend mit Magnesiumionen beladen.

Im Sinne der Erfindung erfolgt die Bestimmung des Teils der Kapazität, mit der das Ionenaustauschermaterial mit einer bestimmten Ionenart beladen ist, nach der DIN 54403 aus April 2009. Gemäß der Vorgehensweise dieser Norm wird zunächst die totale Kapazität des Ionenaustauschermaterials bestimmt. Dabei wird unterschiedlich vorgegangen, je nachdem, ob es sich um einen stark sauren oder schwach sauren Ionenaustauscher handelt. Schwach saure Ionenaustauscher werden dabei zunächst in die Wasserstoffform gebracht. Nach Bestimmung der totalen Kapazität kann bestimmt werden zu welchem Anteil der Kapazität dieser nunmehr mit Magnesiumionen /beziehungsweise einer anderer Ionenart, beladen ist.

Die angegebenen Kapazitäten im Sinne der Erfindung beziehen sich immer auf den Auslieferungszustand. Es versteht sich, dass beispielsweise die Beladung mit Wasserstoffionen bei bestimmungsgemäßer Verwendung der Kartusche sinkt.

Es ist weiter insbesondere vorgesehen, dass erster und zweiter Teil des Ionenaustauschermaterials in einem Verhältnis (Massenverhältnis) von 1:9 bis 9:1, vorzugsweise von 3:7 bis 7:3 vorliegen.

Erfindungsgemäß ist die Kartusche derart ausgebildet, dass das aufzubereitende Wasser in zwei Teilströme aufgeteilt wird, wobei ein erster Teilstrom das stark saure Ionenaustauschermaterial und ein weiterer Teilstrom das schwach saure Ionenaustauschermaterial passiert.

Es hat sich gezeigt, dass bei einer getrennten Bereitstellung von schwach saurem und stark saurem Ionenaustauschermaterial es genauer möglich ist, das Verhältnis verschiedener Ionenarten in dem aufbereiteten Wasser einzustellen.

So kann insbesondere bei der Beladung eines Ionenaustauschermaterials mit Magnesiumionen eine gleichmäßigere Abgabe von Magnesiumionen über die Lebensdauer der Kartusche eingestellt werden.

Es ist insbesondere vorgesehen, dass das aufzubereitende Wasser aufgeteilt wird und teilweise über einen stark sauren Ionenaustauscher und teilweise über ein schwach saures Ionenaustauscher geführt wird und sodann wieder gemischt wird.

Weiter wird ein Verfahren zur Aufbereitung von Trinkwasser beschrieben, insbesondere mittels einer zuvor beschriebenen Kartusche.

Das Trinkwasser wird in zwei Teilströme aufgeteilt, wobei ein erster Teilstrom über ein stark saures Ionenaustauschermaterial und ein zweiter Teilstrom über ein schwach saures Ionenaustauschermaterial geleitet wird.

Eines der Ionenaustauschermaterialien ist zumindest teilweise, vorzugsweise überwiegend mit Magnesiumionen beladen.

Der schwach saure Teil des Ionenaustauschermaterials ist überwiegend mit Wasserstoffionen zu beladen.

Das stark saure Ionenaustauschermaterial ist mit Alkali- oder Erdalkaliionen, insbesondere mit Magnesiumionen beladen wodurch das Wasser mit diesen Ionen angereichert wird.

Gleichzeitig kann der pH-Wert des Wassers derart eingestellt werden, dass dieser nicht auf einen Wert von weniger als 3,5, vorzugsweise auf einen Wert von nicht weniger als 4,2 absinkt.

### Beschreibung der Zeichnungen

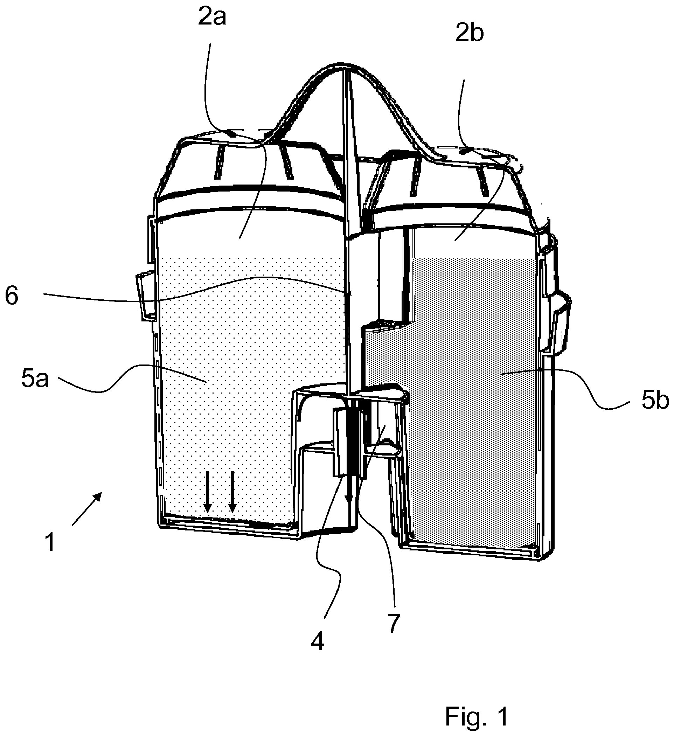

Die Erfindung soll im Folgenden bezugnehmend auf schematisch dargestellte Ausführungsbeispiele anhand der Zeichnungen Fig. 1 bis Fig. 1 näher erläutert werden.

Fig. 1 zeigt eine Schnittansicht einer Kartusche 1 für einen schwerkraftbetriebenen Wasserhaushaltsfilter, wie diese in einen Trichter (nicht dargestellt) eingesetzt werden kann.

Das Grundprinzip einer derartigen Kartusche ist bekannt.

In diesem Ausführungsbeispiel handelt es sich um eine Kartusche 1 mit Strömungsumkehr, bei der das aufzubereitende Wasser über einen Einlauf 3 in eine Kammer 2 hineinläuft, die mit einem Ionenaustauschermaterial 5 gefüllt ist.

Das Ionenaustauschermaterial 5 liegt als Granulat vor.

Bei diesem Ausführungsbeispiel ist der Kartuscheboden nicht offen, sondern das Wasser verlässt nach einer Strömungsumkehr (der Weg des Wassers mit Pfeilen gekennzeichnet) über einen röhrenförmigen Auslauf 4 die Kartusche 1.

Es versteht sich, dass die Erfindung aber auch für Kartuschen vorgesehen ist, die über keine Strömungsumkehr verfügen, bei denen also insbesondere ein mit Öffnungen versehener Kartuschenboden als Auslauf dient (nicht dargestellt).

Der Raum, in welcher sich das Ionenaustauschermaterial befindet, durch einen Steg 6 in zwei Kammern 2a und 2b unterteilt ist.

Die Kammer 2a ist mit einem stark sauren Ionenaustauschermaterial 5a und die Kammer 2b mit einem schwach saurem Ionenaustauschermaterial 5b gefüllt.

Ein Teil des Wassers passiert nunmehr die Kammer 2a während der andere Teil die Kammer 2b passiert.

Nach einer Strömungsumkehr mischt sich das Wasser aus den Kammern 2a und 2b in der über dem Auslauf angeordneten Kammer 7 und verlässt sodann über einen röhrenförmigen Auslauf 4 die Kartusche 1.

Das stark saure Ionenaustauschermaterial 5a ist im Auslieferungszustand überwiegend mit Magnesium beladen. Das schwach saure Ionenaustauschermaterial 5b ist im Auslieferungszustand überwiegend mit Wasserstoff beladen.

So kann das aufzubereitende Trinkwasser mit Magnesiumionen angereichert werden. Weiter wird die Ansäuerung des Trinkwassers reduziert.

Über das Mengenverhältnis von verwendetem schwach sauren und stark sauren Granulat können die Eigenschaften des aufbereiteten Wassers hinsichtlich pH-Wert und Magnesiumgehalt eingestellt werden.

Gegenüber der Konditionierung eines Materials mit zwei verschiedenen Ionenarten wird die Herstellung einer Kartusche, die neben einer Reduzierung der Wasserhärte Magnesium abgibt, vereinfacht.

Die Trennung des stark sauren Ionenaustauschermaterials vom schwach sauren Ionenaustauschermaterial hat bei Beladung des stark sauren Ionenaustauschermaterials mit Magnesium des Weiteren den Vorteil, dass der Anteil an Magnesium im aufzubereitenden Wasser besser eingestellt bzw. höher werden kann.

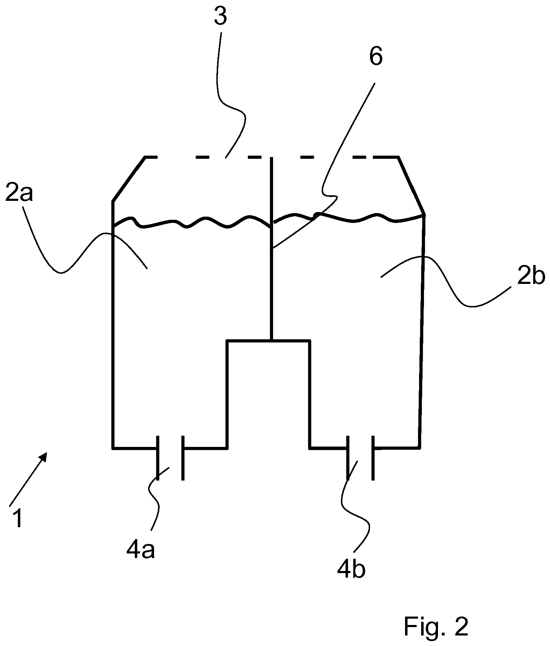

Fig. 2 zeigt eine schematische Schnittansicht einer weiteren Ausführungsform einer Kartusche 1 zur Trinkwasseraufbereitung, bei der, wie in Fig. 1, die Kartusche die Kammern 2a und 2b aufweist, die durch eine Wand 6 voneinander getrennt sind.

Eine der Kammern 2a, 2b ist wiederum mit einem stark saurem Ionenaustauschermaterial und die andere mit einem schwach sauren Ionenaustauschermaterial gefüllt.

Im Unterschied zu der in Fig. 1 dargestellten Ausführungsform sind zwei getrennte Ausläufe 4a, 4b vorgesehen.

Es ist nunmehr denkbar, dass aus jedem dieser Ausläufe 4a, 4b Wasser mit anderen Eigenschaften entnommen werden kann.

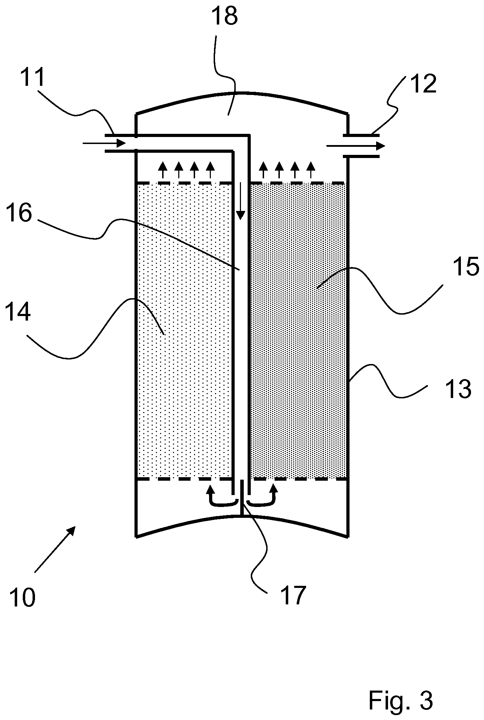

Fig. 3 zeigt eine Ausführungsform einer Kartusche 10, welche zum Anschluss an eine Trinkwasserleitung vorgesehen ist, insbesondere an die Leitung eines Geräts zum Zubereiten von Heißgetränken, wie dies beispielsweise in der Gastronomie Verwendung findet.

Die Kartusche 10 weist ein Gehäuse 13 mit einem Anschluss 11 auf, über den Wasser in das Gehäuse 13 der Kartusche 1 strömt.

Über den Anschluss 12 verlässt das aufbereitete Trinkwasser die Kartusche und kann der weiteren Verwendung zuführt werden.

Der Weg des Wassers ist mit Pfeilen eingezeichnet.

Der Anschluss 11 des Einlaufs ist mit einer Fallleitung 16 verbunden, über die das aufzubereitende Wasser in den Boden des Gehäuses 13 der Kartusche 10 geführt wird.

Der Innenraum der Kartusche 11 ist über eine Wand 17 derart in zwei Teile getrennt, dass in einem Teil der Kartusche ein überwiegend mit Magnesium beladenes Granulat 14 eines stark sauren Ionenaustauschermaterials vorliegt und in einem hiervon getrennten Bereich ein Granulat 15 aus einem schwach sauren Ionenaustauschermaterial, welches im Auslieferungszustand überwiegend in die Wasserstoffform überführt ist.

Das vom Kartuschenboden durch den Druck des nachströmenden Wassers aufsteigende Wasser wird nunmehr in zwei Teilströme unterteilt, von denen der eine das stark saure mit Magnesium beladene Granulat 14 und der andere Teil das schwach saure und mit Wasserstoff beladene Granulat 15 passiert.

In einer oberen Kammer 18 ist im Gehäuse 13 der Kartusche 10 keine Wand vorhanden, so dass sich das Wasser der beiden Teilströme mischt und über den Auslauf 12 die Kartusche 10 verlässt.

Durch die Erfindung wird die Selektivität im Hinblick auf Magnesiumionen derart verbessert, dass es zu einer gleichmäßigeren Abgabe kommt.

### Bezugszeichenliste

- 1: Kartusche
- 2: Kammer
- 3: Einlauf
- 4: Auslauf
- 5: Ionenaustauschermaterial
- 6: Wand
- 7: Kammer
- 10: Kartusche
- 11: Anschluss
- 12: Anschluss
- 13: Gehäuse
- 14: Granulat
- 15: Granulat
- 16: Fallleitung
- 17: Wand
- 18: Kammer

## Patentansprüche

1. Kartusche zur Trinkwasseraufbereitung,
umfassend ein Ionenaustauschermaterial, von dem ein erster Teil mit Magnesiumionen, und ein zweiter Teil mit Wasserstoffionen beladen ist, wobei die Kartusche eine erste Kammer, die ein stark saures Ionenaustauschermaterial enthält und zumindest eine weitere Kammer aufweist, die ein schwach saures Ionenaustauschermaterial enthält und wobei die Kartusche derart ausgebildet ist, dass aufzubereitendes Wasser in zumindest zwei Teilströme aufgeteilt wird, wobei ein Teilstrom die erste Kammer und ein weiterer Teilstrom die weitere Kammer passiert, wobei die erste Kammer das stark saure Ionenaustauschermaterial enthält, welches im Auslieferungszustand zu mindestens 60% seiner Kapazität mit Magnesiumionen beladen ist.

2. Kartusche zur Trinkwasseraufbereitung nach einem der vorstehenden Ansprüche, **dadurch gekennzeichnet, dass** das Ionenaustauschermaterial in der ersten und/oder weiteren Kammer als Granulat ausgebildet ist.

3. Kartusche zur Trinkwasseraufbereitung nach einem der vorstehenden Ansprüche, **dadurch gekennzeichnet, dass** das Ionenaustauschermaterial in der ersten und/oder weiteren Kammer als Ionenaustauschervlies ausgebildet ist

4. Kartusche zur Trinkwasseraufbereitung nach einem der vorstehenden Ansprüche, **dadurch gekennzeichnet, dass** stark saures und schwach saures Ionenaustauschermaterial in einem Verhältnis von 1 zu 9 bis 9 zu 1, vorzugsweise in einem Verhältnis von 3 zu 7 bis 7 zu 3 vorliegen.

5. Kartusche zur Trinkwasseraufbereitung nach einem der vorstehenden Ansprüche, **dadurch gekennzeichnet, dass** die Kartusche zur Verwendung in einem schwerkraftbetriebenen Wasserhaushaltsfilter ausgebildet ist.

## Claims

1. A cartridge for the purification of drinking water, comprising an ion exchanger material, a first part of which is loaded with magnesium ions, and a second part of which is loaded with hydrogen ions, wherein the cartridge has a first chamber containing a highly acidic ion exchanger material and at least a further chamber containing a weakly acidic ion exchanger material, and wherein the cartridge is formed such that water to be purified is divided into at least two partial flows, wherein one partial flow passes through the first chamber and a further partial flow passes through the further chamber, wherein the first chamber contains the highly acidic ion exchanger material, at least 60% of the capacity of which, in the delivery state, is loaded with magnesium ions.

2. The cartridge for the purification of drinking water according to any one of the preceding claims, **characterized in that** the ion exchanger material is formed as granulate in the first and/or further chamber.

3. The cartridge for the purification of drinking water according to any one of the preceding claims, **characterized in that** the ion exchange material is formed as ion exchanger non-woven fabric in the first and/or further chamber.

4. The cartridge for the purification of drinking water according to any one of the preceding claims, **characterized in that** highly acidic and weakly acidic ion exchanger material is present at a ratio of between 1 to 9 and 9 to 1, preferably at a ratio of between 3 to 7 and 7 to 3.

5. The cartridge for the purification of drinking water according to any one of the preceding claims, **characterized in that** the cartridge is formed for use in a gravity-driven water balance filter.

## Revendications

1. Cartouche pour le traitement de l'eau potable,
comprenant un matériau échangeur d'ions par lequel une première partie est chargée en ions de magnésium et une deuxième partie en ions d'hydrogène, la cartouche présentant un premier compartiment qui contient un matériau échangeur d'ions fortement acide et au moins un deuxième compartiment qui contient un matériau échangeur d'ions faiblement acide et la cartouche étant conçue de telle manière à ce que l'eau à traiter soit répartie dans au moins deux flux partiels, un flux partiel traversant le premier compartiment et un deuxième flux partiel le deuxième compartiment, le premier compartiment contenant le matériau échangeur d'ions fortement acide qui est chargé en ions de magnésium pour au moins 60% de sa capacité à la livraison.

2. Cartouche pour le traitement de l'eau potable conformément à l'une des revendications précédentes, **caractérisée en ce que** le matériau échangeur d'ions dans le premier et/ou le deuxième compartiment est conçu sous la forme de granulés.

3. Cartouche pour le traitement de l'eau potable conformément à l'une des revendications précédentes, **caractérisée en ce que** le matériau échangeur d'ions dans le premier et/ou le deuxième compartiment est conçu sous la forme de non-tissé échangeur d'ions.

4. Cartouche pour le traitement de l'eau potable conformément à l'une des revendications précédentes, **caractérisée en ce que** les matériaux échangeurs d'ions fortement acide et faiblement acide sont disponibles dans un rapport de 1:9 jusqu'à 9:1, de préférence dans un rapport de 3:7 jusqu'à 7:3.

5. Cartouche pour le traitement de l'eau potable conformément à l'une des revendications précédentes, **caractérisée en ce que** la cartouche est conçue pour une utilisation dans un filtre à eau domestique fonctionnant par gravité.
